# EUROPEAN PATENT APPLICATION

(11) **EP 4 725 986 A1**
(43) Date of publication of application: **15.04.2026**
(21) Application number: 24819634.7
(22) Date of filing: 10.06.2024
(51) Int. Cl.: C08K 5/053, C08K 5/00, C08L 67/03, C08J 5/18

(54) **CRYSTAL NUCLEATING AGENT FOR BIODEGRADABLE RESIN AND BIODEGRADABLE RESIN COMPOSITION COMPRISING SAME**

(30) Priority: 09.06.2023 KR 20230074509
(71) Applicant: CJ Cheiljedang Corporation, Seoul 04560 (KR)
(72) Inventor: JANG, Robin, Seoul 04560 (KR); YOON, Ki Chull, Seoul 04560 (KR); LEE, Eun-Hye, Seoul 04560 (KR); LEE, Changsuk, Seoul 04560 (KR); JUNG, Minho, Seoul 04560 (KR)
(74) Representative: Meissner Bolte Partnerschaft mbB
(86) International application number: PCT/KR2024/007862
(87) International publication number: WO 2024/253483

(57) **Abstract**

The present invention relates to: a crystal nucleating agent for a biodegradable resin; and a biodegradable resin composition comprising same. The crystal nucleating agent for a biodegradable resin includes an aliphatic compound having three or more hydroxyethyl groups.

## Description

### Technical Field

The present disclosure relates to a crystal nucleating agent for controlling the crystallization rate of a biodegradable resin and to a biodegradable resin composition comprising the crystal nucleating agent.

### Background Art

Petroleum-based synthetic plastics are causing problems such as the creation of microplastics, environmental pollution, and the generation of large amounts of waste. In particular, synthetic plastics are difficult to recycle, increase the acidity of soil, and pose a major threat to the marine ecosystem.

To solve these problems, biodegradable plastic products using polyhydroxyalkanoate (PHA), a plant-derived aliphatic polyester, are attracting attention. Specifically, polyhydroxyalkanoate (PHA) is a naturally biodegradable and environmentally friendly material that can alleviate the problem of waste plastic disposal.

However, biodegradable resins such as polyhydroxyalkanoate (PHA) have a slow crystallization rate; thus, it takes a long period of time to be solidified after being melted. This long solidification time results in slower solidification speeds, which can lead to reduced productivity and degraded mechanical properties of products made from biodegradable resins. For example, when the product manufactured using a polyhydroxyalkanoate (PHA) is a film, it is difficult to apply to the production line for producing films due to the slow solidification rate, and it takes a long period of time for cooling, thereby reducing production efficiency. In addition, once a film has been produced, secondary crystallization of the polyhydroxyalkanoate (PHA) takes place over a certain period of time, which may reduce the physical properties of the product, such as elongation and strength at break.

Therefore, in order to secure the productivity and mechanical properties of products by controlling the crystallization rate of biodegradable resins such as polyhydroxyalkanoate (PHA), technologies for adopting various crystal nucleating agents have been proposed. However, the proposed technologies still have limitations in manufacturing products with a faster crystallization rate (solidification rate) or enhanced mechanical properties.

Accordingly, there is a need to develop a crystal nucleating agent that can more efficiently control the crystallization rate of biodegradable resins such as polyhydroxyalkanoate (PHA), thereby producing products with excellent mechanical properties while exhibiting enhanced productivity during the manufacture of the products.

### Disclosure of Invention

### Technical Problem

To solve the above conventional problems, an object of the present disclosure is to provide a crystal nucleating agent for biodegradable resins that can optimize the crystallization rate of biodegradable resins such as polyhydroxyalkanoate (PHA), thereby enhancing productivity (processability) when products using biodegradable resins are manufactured, while ensuring that the products maintain excellent mechanical properties even after a certain period of time.

In addition, another object of the present disclosure is to provide a biodegradable resin composition comprising the crystal nucleating agent for a biodegradable resin and a biodegradable film prepared from the biodegradable resin composition.

### Solution to Problem

In order to accomplish the above object, the present disclosure provides a crystal nucleating agent for a biodegradable resin, which comprises an aliphatic compound having 3 or more hydroxyethyl groups.

According to an embodiment of the present disclosure, the aliphatic compound is a compound represented by Formula 1 or a derivative thereof.

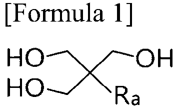

Rₐ is selected from the group consisting of hydrogen, a substituted or unsubstituted C₁-C₅ alkyl group, and a substituted or unsubstituted C₁-C₅ hydroxyalkyl group.

According to another embodiment of the present disclosure, the aliphatic compound may be at least one selected from the group consisting of trimethylolethane, trimethylolpropane, and tripentaerythritol.

In addition, the present disclosure provides a biodegradable resin composition, which comprises the crystal nucleating agent for a biodegradable resin; and a polyhydroxyalkanoate (PHA).

According to an embodiment of the present disclosure, the polyhydroxyalkanoate (PHA) may comprise a repeat unit derived from at least one monomer selected from the group consisting of 3-hydroxybutyrate (3HB), 3-hydroxyhexanoate (3HH), 3-hydroxypropionate (3HP), 3-hydroxyvalerate (3HV), 4-hydroxybutyrate (4HB), 4-hydroxyhexanoate (4HH), 4-hydroxypropionate (4HP), and 4-hydroxyvalerate (4HV).

According to another embodiment of the present disclosure, the polyhydroxyalkanoate (PHA) may comprise a repeat unit derived from 4-hydroxybutyrate (4-HB) in an amount of 1 to 50% by weight based on the total weight of the polyhydroxyalkanoate (PHA).

According to another embodiment of the present disclosure, the polyhydroxyalkanoate may comprise at least one selected from the group consisting of a poly(3-hydroxybutyrate-co-3-hydroxyhexanoate) copolymer (P3HB-co-3HH), a poly(3-hydroxybutyrate-co-3-hydroxyvalerate) copolymer (P3HB-co-3HV), poly(3-hydroxybutyrate-co-3-hydroxypropionate) copolymer (P3HB-co-3HP), poly(3-hydroxybutyrate-co-4-hydroxybutyrate) copolymer (P3HB-co-4HB), poly(3-hydroxybutyrate-co-4-hydroxyhexanoate) copolymer (P3HB-co-4HH), poly(3-hydroxybutyrate-co-4-hydroxyvalerate) copolymer (P3HB-co-4HV), and poly(3-hydroxybutyrate-co-4-hydroxypropionate) copolymer (P3HB-co-4HP).

According to another embodiment of the present disclosure, the polyhydroxyalkanoate (PHA) may be a poly(3-hydroxybutyrate-co-4-hydroxybutyrate) copolymer (P3HB-co-4HB).

According to another embodiment of the present disclosure, the poly(3-hydroxybutyrate-co-4-hydroxybutyrate) copolymer (P3HB-co-4HB) may comprise a repeat unit derived from 4-hydroxybutyrate (4HB) in an amount of 1% by weight to 50% by weight and a repeat unit derived from 3-hydroxybutyrate (3HB) in an amount of 50% by weight to 99% by weight based on the total weight of the poly(3-hydroxybutyrate-co-4-hydroxybutyrate) copolymer (P3HB-co-4HB).

According to another embodiment of the present disclosure, the content of the crystal nucleating agent for a biodegradable resin may be 0.01 to 30 parts by weight relative to 100 parts by weight of the polyhydroxyalkanoate (PHA).

Further, the present disclosure provides a biodegradable film, which is prepared from the biodegradable resin composition.

In addition, the present disclosure provides a use of an aliphatic compound having 3 or more hydroxyethyl groups as a nucleating agent for biodegradable resins, particularly when mixed with polyhydroxyalkanoate (PHA).

### Advantageous Effects of Invention

The crystal nucleating agent for a biodegradable resin according to the present disclosure has a specific functional group and a specific structure (e.g., a compound represented by the above Formula 1 or a derivative thereof) that has an impact on the crystallization procedure of the biodegradable resin. As a result, it can accelerate the solidification rate in a molding process of the biodegradable resin (e.g., injection molding, extrusion molding, and the like) over the prior art. In particular, the crystal nucleating agent for a biodegradable resin according to the present disclosure can remarkably accelerate the crystallization rate (solidification rate) of a polyhydroxyalkanoate (PHA) as compared with the conventional crystal nucleating agents for a polyhydroxyalkanoate (PHA), such as cyanuric acid, talc, mannitol, xylitol, and sorbitol.

Accordingly, when products such as biodegradable films are manufactured using the biodegradable resin composition comprising the crystal nucleating agent for a biodegradable resin according to the present disclosure, the present disclosure can provide products with significantly improved productivity (processability) and mechanical properties.

### Best Mode for Carrying out the Invention

Hereinafter, the present disclosure will be described in detail. The present disclosure is not limited to those given below, but it may be modified into various forms as long as the gist of the disclosure is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

All numbers and expressions related to the quantities of components, reaction conditions, and the like used herein are to be understood as being modified by the term "about" unless otherwise indicated.

### Crystal nucleating agent for a biodegradable resin

The crystal nucleating agent for a biodegradable resin according to the present disclosure has a specific functional group and/or a specific structure that has an impact on the crystallization rate of the biodegradable resin, whereby it can accelerate the crystallization rate (solidification rate) of the biodegradable resin as compared with the prior art, which will be described in detail as follows. Here, the crystallization rate of a biodegradable resin can be defined as the time required for a molten biodegradable resin to form crystals upon cooling and establish a crystal alignment. That is, the crystallization rate of a biodegradable resin may refer to the solidification rate of the biodegradable resin.

The crystal nucleating agent for a biodegradable resin according to the present disclosure comprises an aliphatic compound having 3 or more hydroxyethyl groups 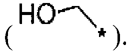 The number of hydroxyethyl groups in the aliphatic compound is not particularly limited as long as it is 3 or more, but it may be 3 to 15, 3 to 13, 3 to 10, 3 to 8, 3 to 6, 3 to 5, or 3 to 4, in light of the crystallization rate of a biodegradable resin and the overall physical properties of a product. For example, the aliphatic compound may be an acyclic-type aliphatic compound having 3 to 10, 3 to 8, or 3 to 4, hydroxyethyl groups.

Specifically, the aliphatic compound may be a compound represented by the following Formula 1 or a derivative thereof.

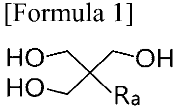

In Formula 1, Rₐ is selected from the group consisting of hydrogen, a substituted or unsubstituted C₁-C₅ alkyl group, and a substituted or unsubstituted C₁-C₅ hydroxyalkyl group. Specifically, Rₐ may be a substituted or unsubstituted methyl group, a substituted or unsubstituted ethyl group, a substituted or unsubstituted propyl group, a substituted or unsubstituted hydroxymethyl group, or a substituted or unsubstituted hydroxyethyl group, but it is not limited thereto.

When the alkyl group and the hydroxyalkyl group in Rₐ are substituted, the substituent is not particularly limited, but it may be at least one selected from the group consisting of deuterium, halogen (F, Cl, Br, or I), a hydroxy group, a cyano group, a nitro group, an amino group, an amidino group, a hydrazine group, a hydrazone group, an ester group, a ketone group, a carboxyl group, a C₁-C₅ alkyl group, a C₁-C₅ hydroxyalkyl group, a C₂-C₅ alkenyl group, a C₂-C₅ alkynyl group, a C₁-C₅ alkoxy group, a C₃-C₁₀ heteroaryl group, and a C₆-C₂₀ aryl group.

A derivative of the compound represented by Formula 1 may be a compound obtained by chemically modifying a part of the compound represented by Formula 1. The modification may include the introduction of a functional group, oxidation, reduction, or substitution of an atom.

For example, the aliphatic compound may be at least one selected from the group consisting of trimethylolethane (a compound represented by Formula 1), trimethylolpropane (a compound represented by Formula 1), and tripentaerythritol (a derivative of a compound represented by Formula 1). Preferably, the aliphatic compound may be trimethylolethane or trimethylolpropane.

As the aliphatic compound is used as a crystal nucleating agent for a biodegradable resin, it is possible to minimize the changes in the mechanical properties (e.g., strength at break, elongation, and the like) of a biodegradable resin (biodegradable resin composition) and a product manufactured therefrom even after a certain period of time (e.g., 1 to 3 weeks) has elapsed while accelerating the crystallization rate of the biodegradable resin to the desired level.

The aliphatic compound may have a molecular weight of, specifically, 100 to 450 g/mole, 100 to 430 g/mole, 105 to 420 g/mole, 105 to 400 g/mole, 110 to 380 g/mole, 110 to 350 g/mole, 115 to 320 g/mole, 115 to 300 g/mole, 120 to 250 g/mole, 120 to 200 g/mole, or 120 to 150 g/mole, but it is not limited thereto.

In addition, the aliphatic compound may have a melting point of, specifically, 40 to 300°C, 45 to 280°C, 48 to 250°C, 50 to 230°C, 55 to 225°C, 70 to 220°C, 100 to 215°C, 150 to 210°C, or 180 to 210°C, but it is not limited thereto.

The biodegradable resin for which the aliphatic compound can serve as a crystal nucleating agent is not particularly limited as long as it is a commonly known biodegradable resin. Specifically, the biodegradable resin may comprise at least one selected from the group consisting of polyhydroxyalkanoate (PHA), polylactic acid (PLA), polybutylene-adipate-co-terephthalate (PBAT), polybutylene succinate (PBS), polyglycolic acid (PGA), polycaprolactone (PCL), and thermoplastic starch (TPS), but it is not limited thereto. Preferably, the biodegradable resin may be a polyhydroxyalkanoate (PHA); and, therefore, the crystal nucleating agent for a biodegradable resin may be crystal nucleating agent for a polyhydroxyalkanoate (PHA).

### Biodegradable resin composition

The biodegradable resin composition according to the present disclosure comprises a crystal nucleating agent for a biodegradable resin; and a polyhydroxyalkanoate (PHA).

The crystal nucleating agent for a biodegradable resin to be contained in the biodegradable resin composition according to the present disclosure is an additive that serves to change the crystallization form of a polyhydroxyalkanoate (PHA) when the polyhydroxyalkanoate (PHA) is melted and then cooled, thereby improving (enhancing) the slow crystallization rate (solidification rate) of the polyhydroxyalkanoate (PHA). This crystal nucleating agent for a biodegradable resin has substantially the same composition and characteristics as the crystal nucleating agent for a biodegradable resin described above.

The content of the crystal nucleating agent for a biodegradable resin is not particularly limited, but it may be 0.01 to 30 parts by weight relative to 100 parts by weight of the polyhydroxyalkanoate (PHA). Specifically, the content of the crystal nucleating agent for a biodegradable resin may be 0.03 to 28 parts by weight, 0.05 to 25 parts by weight, 0.08 to 23 parts by weight, 0.1 to 20 parts by weight, 0.3 to 18 parts by weight, 0.5 to 15 parts by weight, 0.8 to 13 parts by weight, 1 to 10 parts by weight, 1.3 to 8 parts by weight, 1.5 to 6 parts by weight, 1.8 to 5 parts by weight, 2 to 4.5 parts by weight, 2.3 to 4.3 parts by weight, 2.5 to 4 parts by weight, 2.7 to 3.8 parts by weight, 2.8 to 3.5 parts by weight, or 2.9 to 3.3 parts by weight, relative to 100 parts by weight of the polyhydroxyalkanoate (PHA). As the content of the crystal nucleating agent for a biodegradable resin is within the above range, it is possible to provide a product with excellent mechanical properties while accelerating the crystallization rate (solidification rate) of the polyhydroxyalkanoate (PHA) to the desired level.

The polyhydroxyalkanoate (PHA) to be contained in the biodegradable resin composition according to the present disclosure is a natural thermoplastic polyester resin that accumulates within microbial cells. Since a polyhydroxyalkanoate (PHA) can be completely decomposed into carbon dioxide, water, organic waste, and the like in soil and/or the ocean, it can have excellent biodegradability without generating microplastics.

The polyhydroxyalkanoate (PHA) may be obtained by cell disruption using a mechanical method or a physical method, or it may be obtained by cell disruption using a non-mechanical method or a chemical method. Specifically, the polyhydroxyalkanoate (PHA) may be a copolymer obtained through an enzyme-catalyzed polymerization process of one or more monomers within living microbial cells.

The polyhydroxyalkanoate (PHA) may comprise a repeat unit derived from at least one monomer selected from the group consisting of 3-hydroxybutyrate (3HB), 3-hydroxyhexanoate (3HH), 3-hydroxypropionate (3HP), 3-hydroxyvalerate (3HV), 4-hydroxybutyrate (4HB), 4-hydroxyhexanoate (4HH), 4-hydroxypropionate (4HP), and 4-hydroxyvalerate (4HV).

The polyhydroxyalkanoate (PHA) may be classified into a crystalline PHA (cPHA), a semi-crystalline PHA (scPHA), or an amorphous PHA (aPHA) depending on the types of monomers and the content of repeat units derived from the monomers. For example, the polyhydroxyalkanoate (PHA) may be classified into cPHA, scPHA, or aPHA as its crystallinity is controlled depending on the content of a repeat unit (4HB repeat unit) derived from 4-hydroxybutyrate (4HB).

When the polyhydroxyalkanoate (PHA) comprises a repeat unit (4HB repeat unit) derived from 4-hydroxybutyrate (4HB), the content of the 4HB repeat unit is not particularly limited, but it may be 1 to 50% by weight based on the total weight of the polyhydroxyalkanoate (PHA). Specifically, the content of the 4HB repeat unit may be 1 to 48% by weight, 1.2 to 45% by weight, 1.3 to 43% by weight, 1.5 to 42% by weight, 1.7 to 40% by weight, 1.8 to 38% by weight, 2 to 35% by weight, 2.1 to 33% by weight, 2.3 to 32% by weight, 2.5 to 30% by weight, 2.7 to 28% by weight, 2.9 to 27% by weight, 3 to 25% by weight, 4 to 24% by weight, 5 to 23% by weight, 6 to 20% by weight, 7 to 18% by weight, or 8 to 15% by weight, based on the total weight of the polyhydroxyalkanoate (PHA). As the content of the 4HB repeat unit contained in the polyhydroxyalkanoate (PHA) is within the above range, the crystallization rate (solidification rate) of the polyhydroxyalkanoate (PHA) can be controlled to be faster by the crystal nucleating agent for a biodegradable resin. As a result, a product with excellent mechanical properties, processability, and productivity can be provided.

Specifically, the polyhydroxyalkanoate may comprise at least one selected from the group consisting of a poly(3-hydroxybutyrate-co-3-hydroxyhexanoate) copolymer (P3HB-co-3HH), a poly(3-hydroxybutyrate-co-3-hydroxyvalerate) copolymer (P3HB-co-3HV), poly(3-hydroxybutyrate-co-3-hydroxypropionate) copolymer (P3HB-co-3HP), poly(3-hydroxybutyrate-co-4-hydroxybutyrate) copolymer (P3HB-co-4HB), poly(3-hydroxybutyrate-co-4-hydroxyhexanoate) copolymer (P3HB-co-4HH), poly(3-hydroxybutyrate-co-4-hydroxyvalerate) copolymer (P3HB-co-4HV), and poly(3-hydroxybutyrate-co-4-hydroxypropionate) copolymer (P3HB-co-4HP).

Preferably, the polyhydroxyalkanoate (PHA) may be a poly(3-hydroxybutyrate-co-4-hydroxybutyrate) copolymer (P3HB-co-4HB) comprising a repeat unit (3HB repeat unit) derived from 3-hydroxybutyrate (3-HB); and a repeat unit (4HB repeat unit) derived from 4-hydroxybutyrate (4-HB), in light of the processability, productivity, and mechanical properties of a product manufactured from the biodegradable resin composition.

The content of each of the 3HB repeat unit and the 4HB repeat unit contained in the poly(3-hydroxybutyrate-co-4-hydroxybutyrate) copolymer (P3HB-co-4HB) may not be particularly limited. Specifically, the content of the 3HB repeat unit may be 50 to 99% by weight, 55 to 99% by weight, 60 to 98% by weight, 65 to 98% by weight, 70 to 97% by weight, 75 to 97% by weight, 76 to 96% by weight, 77 to 95% by weight, 78 to 94% by weight, 79 to 93% by weight, 80 to 92% by weight, 81 to 91% by weight, or 82 to 90% by weight, based on the total weight of the poly(3-hydroxybutyrate-co-4-hydroxybutyrate) copolymer (P3HB-co-4HB). In addition, the content of the 4HB repeat unit may be 1 to 50% by weight, 1 to 45% by weight, 2 to 40% by weight, 2 to 35% by weight, 3 to 30% by weight, 3 to 25% by weight, 4 to 24% by weight, 5 to 23% by weight, 6 to 22% by weight, 7 to 21% by weight, 8 to 20% by weight, 9 to 19% by weight, or 10 to 18% by weight, based on the total weight of the poly(3-hydroxybutyrate-co-4-hydroxybutyrate) copolymer (P3HB-co-4HB). As the content of each of the 3HB repeat unit and the 4HB repeat unit is within the above range, the interaction between the poly(3-hydroxybutyrate-co-4-hydroxybutyrate) copolymer (P3HB-co-4HB) and the crystal nucleating agent for a biodegradable resin is maximized, whereby a biodegradable resin composition with a fast crystallization rate and excellent physical properties can be provided.

The weight average molecular weight (Mw) of the polyhydroxyalkanoate (PHA) is not particularly limited, but it may be 100,000 to 800,000 g/mole, 130,000 to 780,000 g/mole, 150,000 to 750,000 g/mole, 200,000 to 700,000 g/mole, 250,000 to 650,000 g/mole, 280,000 to 600,000 g/mole, 300,000 to 550,000 g/mole, or 320,000 to 500,000 g/mole.

The biodegradable resin composition according to the present disclosure may further comprise commonly known additives in addition to the crystal nucleating agent for a biodegradable resin and the polyhydroxyalkanoate (PHA). Specifically, the additive may be at least one selected from the group consisting of antioxidants, compatibilizers, slip agents, melt-strength enhancers, ultraviolet absorbers, crosslinking agents, organic pigments, and inorganic pigments, but it is not limited thereto. The content of the additives may be appropriately adjusted within a range that does not adversely affect the physical properties of the biodegradable resin composition and product.

In addition, the biodegradable resin composition according to the present disclosure may further comprise a commonly known biodegradable resin in addition to the polyhydroxyalkanoate (PHA). The biodegradable resin is not particularly limited, but it may comprise at least one selected from the group consisting of polylactic acid (PLA), polybutylene-adipate-co-terephthalate (PBAT), polybutylene succinate (PBS), polyglycolic acid (PGA), polycaprolactone (PCL), and thermoplastic starch (TPS).

The biodegradable resin composition according to the present disclosure may have a significantly fast solidification rate, thereby exhibiting excellent moldability. Specifically, the biodegradable resin composition according to the present disclosure may have a solidification rate, which is the time taken from melting to cooling, of less than 4 minutes, 3 minutes 30 seconds or less, 3 minutes or less, 2 minutes 30 seconds or less, 2 minutes or less, 1 minute 30 seconds or less, 1 minute or less, 30 seconds or less, 20 seconds or less, or 15 seconds or less. Specifically, the solidification rate may be 3 seconds to 3 minutes, 3 seconds to 2 minutes, 4 seconds to 1 minute, 4 seconds to 40 seconds, 5 seconds to 35 seconds, 5 seconds to 25 seconds, 5 seconds to 23 seconds, 6 seconds to 20 seconds, 6 seconds to 18 seconds, or 7 to 15 seconds, but it is not limited thereto.

The biodegradable resin composition according to the present disclosure may be in a state in which the crystal nucleating agent for a biodegradable resin and the polyhydroxyalkanoate (PHA) are physically or chemically compounded. Specifically, the biodegradable resin composition according to the present disclosure may be biodegradable resin pellets obtained by a procedure of melt-kneading a raw material composition comprising the crystal nucleating agent for a biodegradable resin and the polyhydroxyalkanoate (PHA) and extruding them in the form of strands; cooling them in an underwater cutting machine comprising a water bath for solidification; and cutting and drying them.

The melt-kneading may be performed through a single-screw extruder or a twin-screw extruder commonly known. The extrusion temperature (die extrusion temperature) adopted in the melt-kneading is not particularly limited, but it may be 145 to 165°C, 148 to 163°C, 150 to 160°C, 153 to 160°C, 155 to 160°C, or 155 to 158°C.

The temperature of the water bath is not particularly limited, but it may specifically be 20 to 30°C, 22 to 28°C, or 24 to 26°C.

Once the biodegradable resin composition according to the present disclosure has been prepared in the form of pellets, it may be processed into various forms through commonly known molding methods (e.g., injection molding, extrusion molding, compression molding, vacuum molding, pressure molding, blow molding, or the like). Specifically, the biodegradable resin composition according to the present disclosure may be processed into the form of films, sheets, straws, containers, cups, spoons, forks, knives, trays, fishing nets, or bottles.

### Biodegradable film

The biodegradable film according to the present disclosure is prepared from the biodegradable resin composition described above. Specifically, since the biodegradable film according to the present disclosure is manufactured from a biodegradable resin composition comprising the crystal nucleating agent for a biodegradable resin described above, the mechanical properties remain almost unchanged even after a certain period of time, resulting in excellent physical properties and significantly enhanced productivity.

The biodegradable film according to the present disclosure may show a first melting temperature (Tₘ₁), a second melting temperature (Tₘ₂), and a glass transition temperature (T_{c}) when analyzed using a differential scanning calorimeter (DSC).

The first melting temperature (Tₘ₁) of the biodegradable film according to the present disclosure may specifically be 130 to 150°C, 132 to 148°C, 134 to 146°C, 136 to 144°C, 138 to 142°C, or 140 to 141°C, but it is not limited thereto.

In addition, the second melting temperature (Tₘ₂) of the biodegradable film according to the present disclosure may specifically be 151 to 170°C, 152 to 168°C, 154 to 166°C, 156 to 164°C, 158 to 162°C, or 160 to 161°C, but it is not limited thereto.

The glass transition temperature (T_{c}) of the biodegradable film according to the present disclosure may specifically be 55 to 85°C, 57 to 83°C, 59 to 81°C, 60 to 80°C, 62 to 78°C, 64 to 76°C, or 65 to 75°C, but it is not limited thereto.

Meanwhile, the biodegradable film according to the present disclosure may have a strength at break of 30 MPa or more as measured according to ASTM D 882. Specifically, the strength at break of the biodegradable film may be 31 MPa or more, 32 MPa or more, 33 MPa or more, 34 MPa or more, or 35 MPa or more (e.g., 30 to 40 MPa, 31 to 38 MPa, 32 to 37 MPa, 33 to 36 MPa, or 34 to 35 MPa), but it is not limited thereto.

In addition, the biodegradable film according to the present disclosure may have an elongation of 5 to 40% as measured according to ASTM D 882. Specifically, the elongation of the biodegradable film may be 5 to 38%, 6 to 35%, 6 to 32%, 7 to 30%, 7 to 25%, 8 to 20%, 8 to 18%, 9 to 15%, 9 to 13%, or 10 to 12%.

The thickness of the biodegradable film according to the present disclosure is not particularly limited, but it may be 5 to 250 µm, 5 to 200 µm, 5 to 150 µm, 5 to 100 µm, 10 to 90 µm, 15 to 80 µm, 20 to 70 µm, 25 to 65 µm, 30 to 60 µm, 40 to 55 µm, or 50 to 55 µm.

Since the biodegradable film according to the present disclosure has excellent mechanical properties and productivity and is environmentally friendly, it can be used in various fields.

### Mode for the Invention

Hereinafter, the present disclosure will be described in detail with reference to Examples, However, the scope of the present disclosure is not limited to the following examples.

### [Preparation Examples 1 to 5]

The compounds shown in Table 1 below were each prepared as a crystal nucleating agent.

**[Table 1]**

| | Crystal nucleating agent (compound) | Manufacturer |
|---|---|---|
| Prep. Ex. 1 | Trimethylolethane | Sigma Aldrich |
| Prep. Ex. 2 | Trimethylolpropane | Sigma Aldrich |
| Prep. Ex. 3 | Cyanuric acid | TLC |
| Prep. Ex. 4 | Xylitol | Sigma Aldrich |
| Prep. Ex. 5 | D-sorbitol | Sigma Aldrich |
| Prep. Ex. 6 | Succinamide | Sigma Aldrich |

### [Example 1]

### (1) Preparation of a biodegradable resin composition

3 parts by weight (3 phr: parts per hundred rubber) of the crystal nucleating agent (trimethylolethane) of Preparation Example 1 relative to 100 parts by weight of a P3HB-co-4HB resin (CJ CheilJedang, S1000P) having approximately 6% by weight of 4HB repeat unit was prepared. The P3HB-co-4HB resin and the crystal nucleating agent of Preparation Example 1 were fed to a twin-screw extruder (Bouteck) for compounding and forming strands. They were then subjected to a cutting process to prepare a biodegradable resin composition (biodegradable resin pellets). Here, an L/D ratio of 50 and a diameter of 17φ were applied to the twin-screw extruder. In addition, in the twin-screw extruder, the temperature of the hopper zone was maintained at 100°C, the temperature of the discharge die was maintained at 155°C, and the temperature in the water bath was maintained at 25°C.

### (2) Preparation of a biodegradable film

The biodegradable resin composition prepared above was melt-extruded and then fed to a roll-to-roll process to prepare a biodegradable film with a thickness of 50 µm. Here, the temperature of the roll in the roll-to-roll process was maintained at about 38°C.

### [Example 2]

A biodegradable resin composition (biodegradable resin pellets) and a biodegradable film were prepared following the same procedure as in Example 1, except that the crystal nucleating agent (trimethylolpropane) of Preparation Example 2 was used instead of the crystal nucleating agent of Preparation Example 1.

### [Comparative Example 1]

A biodegradable resin composition (biodegradable resin pellets) and a biodegradable film were prepared following the same procedure as in Example 1, except that the crystal nucleating agent (cyanuric acid) of Preparation Example 3 was used instead of the crystal nucleating agent of Preparation Example 1.

### [Comparative Example 2]

A biodegradable resin composition (biodegradable resin pellets) and a biodegradable film were prepared following the same procedure as in Example 1, except that the crystal nucleating agent of Preparation Example 1 was not used (that is, the P3HB-co-4HB resin alone was used).

### [Comparative Example 3]

A biodegradable resin composition (biodegradable resin pellets) and a biodegradable film were prepared following the same procedure as in Example 1, except that the crystal nucleating agent (xylitol) of Preparation Example 4 was used instead of the crystal nucleating agent of Preparation Example 1.

### [Comparative Example 4]

A biodegradable resin composition (biodegradable resin pellets) and a biodegradable film were prepared following the same procedure as in Example 1, except that the crystal nucleating agent (D-sorbitol) of Preparation Example 5 was used instead of the crystal nucleating agent of Preparation Example 1.

### [Comparative Example 5]

A biodegradable resin composition (biodegradable resin pellets) and a biodegradable film were prepared following the same procedure as in Example 1, except that the crystal nucleating agent (succinamide) of Preparation Example 6 was used instead of the crystal nucleating agent of Preparation Example 1.

### [Test Example 1] Measurement of solidification rate

In Examples 1 and 2 and Comparative Examples 1 to 5, the strands discharged through the discharge die after compounding were immediately put into the water bath at 25°C, and the time taken until they were not pulled and stretched in the water bath was measured.

### [Test Example 2] Evaluation of suitability for film preparation

After the solidification rate was measured in Test Example 1, it was evaluated whether it was suitable for film preparation according to the following criteria.
⊚: Solidification rate within 20 seconds
∘: Solidification rate within 1 minute
△: Solidification rate within 2 minutes
×: Solidification rate for 2 minutes or more

### [Test Example 3] Analysis of Tₘ, T_{c}, T_{cc}, and ΔH_{c}

The biodegradable resin compositions (biodegradable resin pellets) or biodegradable films prepared in Examples 1 and 2 and Comparative Examples 1 to 5 were each analyzed using commonly known differential scanning calorimeter (DSC) to determine the melting temperature (Tₘ), crystallization temperature (T_{c}), cold crystallization temperature (T_{cc}), and heat capacity (ΔH_{c}). In such an event, the DSC analysis was carried out while the temperature was raised from -50°C to 190°C at a rate of 10°C/minute and then lowered from 190°C to -50°C at a rate of 10°C/minute.

### [Test Example 4] Analysis of strength at break and elongation

The biodegradable resin compositions (biodegradable resin pellets) or biodegradable films prepared in Examples 1 and 2 and Comparative Examples 1 to 5 were each analyzed using a universal test machine (UTM) to determine the strength at break and elongation. Specifically, each biodegradable resin composition (biodegradable resin pellets) or biodegradable film was pressed with a hot press (set temperature 160°C) to produce a test specimen (film test specimen) with a width of 15 mm, a length of 100 mm, and a thickness of 200 µm, which was left at room temperature for 1, 7, and 14 days, respectively, to measure the strength at break and elongation according to ASTM D 882 (crosshead speed: 200 mm/minute, width: 15 mm, gauge length: 50 mm).

The results of the test examples are shown in Tables 2 and 3 below.

**[Table 2]**

| | Crystal nucleating agent | Amount of the crystal nucleating agent added (phr) | Solidification rate | Suitability for film preparation | Tₘ₁ (°C) | Tₘ₂ (°C) | T_{c} (°C) | T_{cc} (°C) | ΔH_{c} (J/g) |
|---|---|---|---|---|---|---|---|---|---|
| Ex. 1 | Trimethylol ethane | 3 | 7-15 seconds | ⊚ | 140 | 160 | 66 | - | 33 |
| Ex. 2 | Trimethylol propane | 3 | 35 seconds | ○ | 142 | 160 | 75 | - | 63 |
| C. Ex. 1 | Cyanuric acid | 3 | 40 seconds | ○ | 153 | 164 | 104 | - | 51 |
| C. Ex. 2 | - | - | 5 minutes or longer | × | 146 | 163 | 84 | - | 50 |
| C. Ex. 3 | Xylitol | 3 | 4 minutes or longer | × | 142 | 159 | 43 | 47 | 9 |
| C. Ex. 4 | D-sorbitol | 3 | 4 minutes or longer | × | 140 | 160 | 59 | 47 | 20 |
| C. Ex. 5 | Succinamide | 3 | 2 minutes or shorter | △ | 154 | 164 | 108 | - | 50 |

**[Table 3]**

| | After 1 day | | After 7 days | | After 14 days | |
|---|---|---|---|---|---|---|
| | Strength at break (MPa) | Elongation (%) | Strength at break (MPa) | Elongation (%) | Strength at break (MPa) | Elongation (%) |
| Ex. 1 | 35 | 11 | 35 | 8 | 36 | 4 |
| Ex. 2 | 34 | 15 | 34 | 9 | 35 | 6 |
| C. Ex. 1 | 35 | 18 | 35 | 10 | 35 | 7 |
| C. Ex. 2 | 31 | 300 | 33 | 123 | 34 | 21 |
| C. Ex. 3 | 31 | 80 | 33 | 50 | 35 | 21 |
| C. Ex. 4 | 31 | 75 | 32 | 74 | 35 | 15 |
| C. Ex. 5 | 32 | 45 | 33 | 19 | 35 | 8 |

Referring to Tables 2 and 3 above, in Examples 1 and 2 according to the present disclosure, the solidification rate was 35 seconds or shorter (in particular, in Example 1, the solidification rate was very fast at 7 to 15 seconds) indicating that the productivity (production efficiency) of the film was excellent, and the crystallization of the polyhydroxyalkanoate (PHA) was completed quickly and the mechanical properties of the film were maintained with little change over time (see the strength at break and elongation after 1 day, 7 days, and 14 days).

In contrast, in Comparative Example 2 in which a crystal nucleating agent was not used, the solidification rate was 5 minutes or longer, indicating that the production efficiency of the film was lowered, and the mechanical properties of the film was deteriorated significantly as time passed. In addition, in Comparative Examples 1, 3, 4, and 5, in which a commonly known crystal nucleating agent was used rather than the crystal nucleating agent according to the present disclosure, the productivity (production efficiency) of the film was lowered, or the mechanical properties of the film were deteriorated.

## Claims

1. A crystal nucleating agent for a biodegradable resin, which comprises an aliphatic compound having 3 or more hydroxyethyl groups.

2. The crystal nucleating agent for a biodegradable resin of claim 1, wherein the aliphatic compound is a compound represented by the following Formula 1 or a derivative thereof: 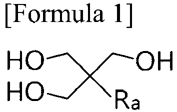 in Formula 1, Rₐ is selected from the group consisting of hydrogen, a substituted or unsubstituted C₁-C₅ alkyl group, and a substituted or unsubstituted C₁-C₅ hydroxyalkyl group.

3. The crystal nucleating agent for a biodegradable resin of claim 1, wherein the aliphatic compound is at least one selected from the group consisting of trimethylolethane, trimethylolpropane, and tripentaerythritol.

4. A biodegradable resin composition, which comprises the crystal nucleating agent for a biodegradable resin of claim 1; and a polyhydroxyalkanoate (PHA).

5. The biodegradable resin composition of claim 4, wherein the polyhydroxyalkanoate (PHA) comprises a repeat unit derived from at least one monomer selected from the group consisting of 3-hydroxybutyrate (3HB), 3-hydroxyhexanoate (3HH), 3-hydroxypropionate (3HP), 3-hydroxyvalerate (3HV), 4-hydroxybutyrate (4HB), 4-hydroxyhexanoate (4HH), 4-hydroxypropionate (4HP), and 4-hydroxyvalerate (4HV).

6. The biodegradable resin composition of claim 4, wherein the polyhydroxyalkanoate (PHA) comprises a repeat unit derived from 4-hydroxybutyrate (4HB) in an amount of 1 to 50% by weight based on the total weight of the polyhydroxyalkanoate (PHA).

7. The biodegradable resin composition of claim 4, wherein the polyhydroxyalkanoate comprises at least one selected from the group consisting of a poly(3-hydroxybutyrate-co-3-hydroxyhexanoate) copolymer (P3HB-co-3HH), a poly(3-hydroxybutyrate-co-3-hydroxyvalerate) copolymer (P3HB-co-3HV), poly(3-hydroxybutyrate-co-3-hydroxypropionate) copolymer (P3HB-co-3HP), poly(3-hydroxybutyrate-co-4-hydroxybutyrate) copolymer (P3HB-co-4HB), poly(3-hydroxybutyrate-co-4-hydroxyhexanoate) copolymer (P3HB-co-4HH), poly(3-hydroxybutyrate-co-4-hydroxyvalerate) copolymer (P3HB-co-4HV), and poly(3-hydroxybutyrate-co-4-hydroxypropionate) copolymer (P3HB-co-4HP).

8. The biodegradable resin composition of claim 4, wherein the polyhydroxyalkanoate (PHA) is a poly(3-hydroxybutyrate-co-4-hydroxybutyrate) copolymer (P3HB-co-4HB).

9. The biodegradable resin composition of claim 8, wherein the poly(3-hydroxybutyrate-co-4-hydroxybutyrate) copolymer (P3HB-co-4HB) comprises a repeat unit derived from 4-hydroxybutyrate (4HB) in an amount of 1% by weight to 50% by weight and a repeat unit derived from 3-hydroxybutyrate (3HB) in an amount of 50% by weight to 99% by weight based on the total weight of the poly(3-hydroxybutyrate-co-4-hydroxybutyrate) copolymer (P3HB-co-4HB).

10. The biodegradable resin composition of claim 4, wherein the content of the crystal nucleating agent for a biodegradable resin is 0.01 to 30 parts by weight relative to 100 parts by weight of the polyhydroxyalkanoate (PHA).

11. A biodegradable film, which is prepared from the biodegradable resin composition of claim 4.

12. Use of an aliphatic compound having 3 or more hydroxyethyl groups as a nucleating agent for biodegradable resins when mixed with a polyhydroxyalkanoate (PHA).
